# EUROPÄISCHE PATENTANMELDUNG

(11) **EP 4 757 162 A1**
(43) Veröffentlichungstag der Anmeldung: **10.06.2026**
(21) Anmeldenummer: 24217855.6
(22) Anmeldetag: 05.12.2024
(51) Int. Cl.: H02M 7/493, H02M 7/5387, H02M 1/12, H02M 1/00

(54) **UMRICHTERVERBUND UND VERFAHREN ZUR BEREITSTELLUNG SYNCHRONISIERTER AUSGANGSSPANNUNGEN MIT EINSTELLBAREN PHASENVERSCHIEBUNGEN**

(71) Anmelder: Ema Indutec GmbH, 74909 Meckesheim (DE)
(72) Erfinder: Leister, Michael, 68723 Plankstadt (DE); Bintz, Steffen, 71554 Weissach im Tal (DE); Rösch, Jochen, 69168 Wiesloch (DE)
(74) Vertreter: mepat Patentanwälte

(57) **Zusammenfassung**

Die vorliegende Erfindung stellt einen Umrichterverbund (1), ausgebildet zur Bereitstellung einer Mehrzahl synchronisierter Ausgangsspannungen (221, 222, 223, 224) mit einstellbaren Phasenverschiebungen, dessen Verwendung und ein Verfahren zur Bereitstellung einer Mehrzahl synchronisierter Ausgangsspannungen bereit. Der Umrichterverbund (1) weist dazu eine Takteinheit (10), die dazu ausgebildet ist, einen Referenztakt (110) bereitzustellen, und zumindest zwei Ausgangsumrichter (21, 22, 23, 24) auf. Letztere sind mit der Takteinheit (10) verbunden und dazu ausgebildet, eine auf den Referenztakt (110) synchronisierte Ausgangsspannung (221, 222, 223, 224) mit einer auf den Referenztakt (110) bezogenen Phasenverschiebung (Δφ) zu generieren, die für jeden der zumindest zwei Ausgangsumrichter (21, 22, 23, 24) vorgebbar ist.

## Beschreibung

Die Erfindung betrifft einen Umrichterverbund und ein Verfahren, um damit mehrere synchronisierte Ausgangsspannungen mit einstellbaren Phasenverschiebungen bereitzustellen.

Aus dem Stand der Technik ist bekannt, Umrichter für elektrische Lastkreise z. B. zur Erzeugung einer Wirkleistung einzusetzen. Dabei generieren Umrichter aus einer Eingangswechselspannung eine in Frequenz und/oder Amplitude gewandelte Ausgangswechselspannung, die auf den elektrischen Lastkreis geschaltet wird. Dazu eingesetzte Umrichter weisen beispielsweise einen Gleichrichter, einen Zwischenkreis, einen Wechselrichter und eine Steuerung zur Ansteuerung des Wechselrichters auf.

Ein Beispiel für einen Lastkreis ist eine Induktionseinheit für die induktive Erwärmung eines Materials. Induktionserwärmungsanlagen wie Induktionsöfen oder Induktionsheizungen umfassen meist mehrere Induktionseinheiten, die mit der Ausgangsspannung eines Umrichters versorgt werden. Dabei entsteht in der Umgebung des Induktors ein elektromagnetisches Wechselfeld, durch das in elektrisch leitendem Material Wärme erzeugt wird, die - je nach Anwendung - durch Wärmeleitung und/oder Rühren homogen verteilt wird. Einer als Schwingkreis mit einem Induktor und einem parallel oder in Reihe geschalteten Kondensator ausgebildeten Induktionseinheit kann mit einem Wirkfaktor nahe 1 betrieben werden, wenn die Frequenz der Ausgangsspannung an die Resonanzfrequenz des Schwingkreises angepasst wird. Da sich während des induktiven Heizvorgangs die Resonanzfrequenz des Schwingkreises ändert, und die Eindringtiefe des Wechselfelds frequenzabhängig ist, wird die Frequenz der Ausgangsspannung des Umrichters während des Betriebs durch eine Steuerung nachgeregelt.

In Bezug auf Anzahl und Anordnung der Induktionseinheiten einer Induktionserwärmungsanlage spielen der anwendungsabhängige Energieeintrag, der je nach Anwendung gezielt oder gleichmäßig erfolgen soll, und die Heizleistung der Induktionseinheiten eine Rolle. Ferner richten sich Anordnung und Anzahl der Induktionseinheiten nach dem zu erwärmenden Gegenstand, z. B. nach der Bauteilgeometrie eines zu klebenden Bauteils oder nach der Anlagengeometrie zum Schmelzen einer Materialmasse. Mit der Anzahl der Induktionseinheiten steigt die Anzahl der zum Betrieb erforderlichen Umrichter, die die Ausgangsspannung mit der entsprechenden Frequenz und Amplitude zur Versorgung der Induktionseinheiten mit einer gewünschten Leistung bereitstellen. Dabei wird der Betrieb einer solchen Umrichteranordnung aus mehreren Umrichtern für eine optimale Ansteuerung mehrerer Lastkreise aufeinander abgestimmt.

Analoges gilt für konduktive Heizanlagen, die elektrische Widerstandserwärmung nutzen, wobei Strom durch ein zu heizendes Werkstück fließt, das somit einen Teil des Stromkreises bildet. Außer zur Erwärmung länglicher Metallwerkstücke werden konduktive Heizanlagen zum Schmelzen von Glas eingesetzt, wobei zwischen direkter und indirekter Widerstandserwärmung unterschieden wird. Bei der direkten Widerstandserwärmung wird mit Elektroden ein elektrischer Kontakt mit der Glasschmelze hergestellt. Dazu werden z. B. stabförmige Elektroden in die vorgeschmolzene Glasmasse eingeführt. Alternativ können bei einer konduktiven Heizeinrichtung die Elektroden durch Wand- oder Bodenabschnitte des Schmelzgefäßes gebildet werden, wobei ein Elektrodenpaar aus zwei Elektroden mit der dazwischen liegenden Schmelzmasse einen Lastkreis bildet, der an eine Wechselspannungsquelle wie einen Umrichter angeschlossen wird. Durch die Anordnung der Elektroden kann der Wärmeeintrag in die Schmelze beeinflusst werden. Um Schmelzen mit hoher elektrischer Leitfähigkeit zu beheizen, kann das Schmelzgefäß mit mehreren unabhängig betreibbaren Elektrodenpaaren ausgestattet werden, sodass hohe Stromdichten innerhalb der Schmelze für ausreichende Heizleistungen erreicht werden. Dabei wird jedes Elektrodenpaar von jeweils einer Wechselstromquelle bzw. einem Umrichter versorgt. Neben der Anordnungsweise beeinflusst die Betriebsweise der Elektrodenpaare mittels der separaten Umrichter die räumliche Temperaturverteilung in der Schmelze.

Ausgehend von diesem Stand der Technik ist es Aufgabe der vorliegenden Erfindung, eine verbesserte Umrichteranordnung zur Schaltung auf mehrere Lastkreise bereitzustellen.

Diese Aufgabe wird durch einen Umrichterverbund mit den Merkmalen des unabhängigen Anspruchs 1 gelöst.

Eine weitere Aufgabe besteht darin, eine Betriebsanlage mit mehreren Lastkreisen optimal zu betreiben, und wird durch die Verwendung eines Umrichterverbunds mit den Merkmalen des unabhängigen Anspruchs 10 gelöst.

Die noch weitere Aufgabe, einen aufeinander abgestimmten Betrieb mehrerer Umrichter zur optimalen Ansteuerung mehrerer Lastkreise bereitzustellen, wird durch das Verfahren mit den Merkmalen des unabhängigen Anspruchs 11 gelöst.

Bevorzugte Ausführungsformen des Umrichterverbunds und des Verfahrens sind in den jeweiligen Unteransprüchen ausgeführt.

Nach einer ersten Ausführungsform weist ein erfindungsgemäßer Umrichterverbund, der zur Bereitstellung einer Mehrzahl synchronisierter Ausgangsspannungen mit einstellbaren Phasenverschiebungen ausgebildet ist, eine Takteinheit, die dazu ausgebildet ist, einen Referenztakt bereitzustellen, und zumindest zwei Ausgangsumrichter auf, die mit der Takteinheit verbunden sind. Die Ausgangsumrichter sind dazu ausgebildet, eine auf den Referenztakt synchronisierte Ausgangsspannung mit einer auf den Referenztakt bezogenen Phasenverschiebung zu generieren, die für jeden der zumindest zwei Ausgangsumrichter separat vorgegeben wird.

Ausgangsspannung wird hierin abkürzend für Ausgangswechselspannung verwendet, die jeder Ausgangsumrichter mit einer bestimmten Frequenz erzeugt, wobei durch die Synchronisierung alle Ausgangsspannungen dieselbe Frequenz haben. Der erfindungsgemäße Umrichterverbund ermöglicht mit den einstellbaren Phasenverschiebungen der synchronisierten d. h. frequenzsynchronen Ausgangsspannungen eine Anpassung des Betriebs der angeschlossenen Lastkreise für einen z. B. gezielten bzw. gleichmäßigen Energieeintrag, insbesondere bei konduktiven Heizanwendungen wie etwa einem Glasschmelzebad. Vorteilhaft kann der erfindungsgemäße Umrichterverbund die synchronisierten Ausgangsspannungen in einem breiten Frequenzbereich von 5 Hz bis 400 kHz, insbesondere 50 Hz bis 130 kHz, beispielsweise 10 kHz oder 3 kHz, bereitstellen. Ferner ist es möglich, den erfindungsgemäßen Umrichterverbund zur Versorgung einer induktiven Betriebsanlage mit mehreren Lastkreisen zu nutzen.

"Referenztakt" bezeichnet hierin ein Taktsignal, das zur Synchronisierung des Betriebs der Umrichter verwendet wird, sodass die Umrichter mit der gleichen Taktfrequenz (innerhalb bestimmter Toleranzen) und einer festen Phasenbeziehung zueinander arbeiten. Üblicherweise ist das Taktsignal ein durch eine Taktfrequenz definiertes, periodisches Signal, das vorzugsweise als Rechtecksignal zwischen zwei Logikpegeln (High und Low) wechselt und z. B. von einem Oszillator erzeugt werden kann. Frequenzteiler oder Phasenregelschleifen (PLL) können zur Anpassung der Taktfrequenz eingesetzt werden. Entsprechend entspricht die "auf den Referenztakt bezogene Phasenverschiebung" der Phasenverschiebung (oder auch Phasenlage) des von dem jeweiligen Umrichter generierten periodischen Spannungssignals und des periodischen Taktsignals, dessen Periodendauer der des Spannungssignals entspricht oder ein ganzzahliges Vielfaches davon ist.

Nach einer weiteren Ausführungsform des erfindungsgemäßen Umrichterverbunds weist jeder Ausgangsumrichter zumindest eine Steuerung auf, die mit einer Eingabeschnittstelle kommunikativ verbunden ist, die zur Vorgabe eines Soll-Werts der jeweiligen Phasenverschiebung ausgebildet ist.

Vorteilhaft kann hierbei die Phasenverschiebung jeder Ausgangsspannung der einzelnen Umrichter auch während des Betriebs geändert werden, wobei die Ausgangsspannungen frequenzsynchron bleiben. Dabei kann jeder Ausgangsumrichter eine eigene Eingabeschnittstelle aufweisen, oder der Umrichterverbund kann eine gemeinsame Eingabeschnittstelle für alle Ausgangsumrichter haben.

Nach einer noch weiteren Ausführungsform des erfindungsgemäßen Umrichterverbundes hat jeder Ausgangsumrichter zumindest einen Wechselrichter. Die zumindest eine Steuerung ist dazu ausgebildet, den zumindest einen Wechselrichter zur Generierung der zumindest einen auf den Referenztakt synchronisierten Ausgangsspannung mit der jeweiligen auf den Referenztakt bezogenen Phasenverschiebung anzusteuern.

Weitere Komponenten des Ausgangsumrichter können einen Gleichrichter und einen Zwischenkreis umfassen, um aus einer Eingangswechselspannung wie der Dreiphasenwechselspannung des öffentlichen Stromnetzes die jeweilige Ausgangsspannung zu generieren. Alternativ zu diesem indirekten Umrichtertyp ist es aber auch denkbar, den Umrichterverbund mit Direktumrichtern wie Matrix-Umrichtern oder mit Hybridumrichtern (Mischform aus indirektem und direktem Umrichtertyp) zu realisieren. Ein Matrix-Umrichter wandelt Spannung und Frequenz direkt in einer Stufe mit einer Schaltung um, die nicht in einzelne Module wie Gleichrichter oder Wechselrichter gliederbar ist, aber wie der Wechselrichter durch eine Steuerung zur Generierung der zumindest einen auf den Referenztakt synchronisierten Ausgangsspannung mit der jeweiligen auf den Referenztakt bezogenen Phasenverschiebung angesteuert werden kann.

Weitere Alternativen im Umrichteraufbau sind bei abweichender Eingangsspannung denkbar, die beispielsweise in einem Betriebsnetz bereitgestellt wird. Handelt es sich dabei beispielsweise um ein Gleichspannungsnetz, kann ein Ausgangsumrichter anstelle eines Gleichrichters beispielsweise einen Gleichspannungsnetzeingang mit Gleichspannungswandler aufweisen.

Nach einer noch weiteren Ausführungsform des erfindungsgemäßen Umrichterverbunds weist die Takteinheit eine den Referenztakt erzeugende Vorrichtung auf, die aus einer Gruppe ausgewählt ist, die zumindest einen Taktgenerator, einen Frequenz- bzw. Funktionsgenerator, eine Netzspannungsaufbereitungseinheit und eine Umrichtersteuerung umfasst. Bei der Umrichtersteuerung kann es sich um die Steuerung eines der Ausgangsumrichter handeln, die zur Referenztakterzeugung der Takteinheit genutzt wird, oder um die Steuerung eines anderen Umrichters, der dazu geeignet ist.

Ferner kann der erfindungsgemäße Umrichterverbund zumindest ein Kommunikationsnetz aufweisen, mit dem die den Referenztakt erzeugende Vorrichtung und die Ausgangsumrichter verbunden sind. Alternativ oder zusätzlich kann das Kommunikationsnetz die Eingabeschnittstelle zur Vorgabe des Soll-Werts der jeweiligen Phasenverschiebung aufweisen bzw. damit verbunden sein, insbesondere, wenn eine gemeinsame Eingabeschnittstelle für alle Ausgangsumrichter vorgesehen ist.

Nach einer weiteren Ausführungsform des erfindungsgemäßen Umrichterverbunds weist jede Steuerung eine Mess- und Regelungseinrichtung auf oder ist damit verbunden, wobei jede Mess- und Regelungseinrichtung dazu ausgebildet ist, einen Ist-Wert der jeweiligen Phasenverschiebung in Bezug zu dem Referenztakt zu messen und mit dem Soll-Wert zur Bestimmung eines Stellwerts der Steuerung zu vergleichen. Dabei ist es auch möglich, dass der gemessene Ist-Wert über das Kommunikationsnetz ausgegeben oder angezeigt wird.

Nach einer alternativen Ausführungsform des erfindungsgemäßen Umrichterverbunds umfasst die Takteinheit einen Basisumrichter und zumindest zwei Steuerungsumrichter, die mit dem Basisumrichter verbunden sind. Der Basisumrichter ist dazu ausgebildet, aus einer Eingangsspannung zumindest zwei auf einen Referenztakt synchronisierte Basisspannungen mit jeweils einer auf den Referenztakt bezogenen Phasenverschiebung zu generieren. Und jeder Steuerungsumrichter ist dazu ausgebildet, aus jeweils einer der Basisspannungen zumindest zwei auf den Referenztakt synchronisierte Steuerungsspannungen mit jeweils einer auf den Referenztakt bezogenen Phasenverschiebung zu generieren. Ferner hat dieser Umrichterverbund zumindest zwei Ausgangseinheiten, wobei jede Ausgangseinheit zumindest zwei Ausgangsumrichter aufweist, die jeweils einem der Steuerungsumrichter zugeordnet sind. Jeder Ausgangsumrichter ist dazu ausgebildet, aus einer der Steuerungsspannungen des zugeordneten Steuerungsumrichters zumindest eine auf den Referenztakt synchronisierte Ausgangsspannung mit einer auf den Referenztakt bezogenen Phasenverschiebung zu generieren. Erfindungsgemäß sind so die Ausgangsspannungen aller Ausgangsumrichter mit ihren auf den Referenztakt bezogenen Phasenverschiebungen auf den Referenztakt synchronisiert.

Auch hierbei sind die Phasenverschiebungen für die Basis- und Steuerungsumrichter vorgebbar, die dazu mit einer bzw. der Eingabeschnittstelle kommunikativ verbunden sind, die zur Vorgabe des Soll-Werts der jeweiligen Phasenverschiebung ausgebildet ist. Und da in dieser Ausführungsform bereits die Steuerungsumrichter synchronisierten Steuerungsspannungen mit vorgegebener Phasenverschiebung bereitstellen, können die Ausgangsumrichter wahlweise zur weiteren Einstellung der auf den Referenztakt bezogenen Phasenverschiebung oder zur Verstärkung bzw. Duplizierung der bereits phasenverschobenen Steuerungsspannung eingesetzt werden. Bei Verwendung der Ausgangsumrichter zur Verstärkung bzw. Duplizierung entspricht die Phasenverschiebung der synchronisierten Ausgangsspannung des Ausgangsumrichters der Phasenverschiebung der Steuerungsspannung des zugeordneten Steuerungsumrichters.

Die unterschiedlichen Bezeichnungen "Basisumrichter", "Steuerungsumrichter" und "Ausgangsumrichter" für die Umrichter des Umrichterverbunds dienen der besseren Unterscheidbarkeit zum einfacheren Verständnis der Struktur des alternativen Umrichterverbunds, bedeuten aber keine Beschränkung der Umrichter hinsichtlich ihres Aufbaus. Ebenfalls zur Vereinfachung des Verständnisses und zur Unterscheidung der "Ausgangsspannung des Ausgangsumrichters" wurden die Begriffe "Basisspannung" und "Steuerungsspannung" gewählt, wobei "Basisspannung" eine Ausgangsspannung des Basisumrichters und "Steuerungsspannung" eine Ausgangsspannung eines Steuerungsumrichters bezeichnet. Gleichzeitig entspricht jede "Basisspannung" der Eingangsspannung eines Steuerungsumrichters und jede "Steuerungsspannung" der Eingangsspannung eines Ausgangsumrichters.

Als Eingangsspannung kann in einer bevorzugten Ausführungsform die Dreiphasenwechselspannung des öffentlichen Stromnetzes verwendet werden. Der Basisumrichter kann dazu beispielsweise über einen Leistungsschalter und/oder Abspanntransformator mit dem Stromnetz verbunden sein, und ggf. einen Hauptschalter des Umrichterverbunds aufweisen.

Da der alternative Umrichterverbund in der Art eines Baumdiagramms aufgebaut ist, das sich ausgehend von dem Basisumrichter mit den Basisspannungen über die Steuerungsumrichter mit den Steuerungsspannungen bis zu den Ausgangsumrichtern zunehmend verästelt, kann der erfindungsgemäße Umrichterverbund in einfacher Weise geändert und erweitert werden. In einer einfachsten Ausführungsform umfasst der erfindungsgemäße Umrichterverbund den Basisumrichter, zwei Steuerungsumrichter und zwei Ausgangseinheiten mit jeweils zwei Ausgangsumrichtern, d. h. zusammen vier Ausgangsumrichter. Damit können vier frequenzsynchrone Ausgangsspannungen mit einstellbarer Phasenverschiebung bereitgestellt werden, mit denen eine Betriebsanlage mit vier Lastkreisen versorgt werden kann. Indem die Anzahl der mit dem Basisumrichter generierten Basisspannungen und/oder die Anzahl der pro Steuerungsumrichter generierten Steuerungsspannungen variiert wird, ist entsprechend eine Änderung der Anzahl der Steuerungsumrichter und Ausgangsumrichter möglich.

Nach einer weiteren erfindungsgemäßen Ausführungsform dieses Umrichterverbunds kann jeder Steuerungsumrichter dazu ausgebildet sein, aus jeweils einer der Basisspannungen drei auf den Referenztakt synchronisierte Steuerungsspannungen mit jeweils einer auf den Referenztakt bezogenen Phasenverschiebung zu generieren. Damit kann jede Ausgangseinheit drei Ausgangsumrichter aufweisen, die dazu ausgebildet sind, aus den jeweiligen Steuerungsspannungen die auf den Referenztakt synchronisierten Ausgangsspannungen mit den jeweiligen auf den Referenztakt bezogenen Phasenverschiebungen zu generieren. In der Ausführungsform mit einem Basisumrichter, der zwei Basisspannungen generiert, und folglich zwei Steuerungsumrichtern, kann der Umrichterverbund dann sechs Ausgangsumrichter aufweisen, die frequenzsynchrone Ausgangsspannungen mit einstellbarer Phasenverschiebung generieren.

Nach einer dazu alternativen oder zusätzlichen erfindungsgemäßen Ausführungsform dieses Umrichterverbunds kann der Basisumrichter zur Generierung von drei Basisspannungen ausgebildet sein, sodass die Takteinheit drei Steuerungsumrichter und entsprechend zugeordnet drei Ausgangseinheiten aufweisen kann. Da die Anzahl der Ausgangsumrichter pro Ausgangseinheit der Anzahl der des jeweiligen Steuerungsumrichters generierten Steuerungsspannungen entspricht, kann der Umrichterverbund bei sechs oder neun Ausgangsumrichtern zur Bereitstellung der frequenzsynchronen Ausgangsspannungen mit einstellbarer Phasenverschiebung aufweisen.

Nach einer weiteren Ausführungsform dieses Umrichterverbunds kann vorgesehen sein, dass die Steuerungsumrichter bezüglich der Anzahl der generierten Steuerungsspannungen unterschiedlich ausgebildet sind, sodass jeder Steuerungsumrichter entweder zwei oder drei Steuerungsspannungen generiert. Dann weist die dem jeweiligen Steuerungsumrichter zugeordnete Ausgangseinheit entsprechend zwei oder drei Ausgangsumrichter auf, sodass es möglich ist, dass der Umrichterverbund in Summe fünf, sieben oder acht Ausgangsumrichter aufweisen kann.

Nach noch weiteren Ausführungsformen dieses Umrichterverbunds sind weitere Erweiterungsmöglichkeiten denkbar, wie beispielsweise, dass der Basis- und/oder dass die Steuerungsumrichter dazu ausgebildet sind, mehr als drei Basis- bzw. Steuerungsspannungen zu generieren, die dann den Umrichtern der jeweils nächsten Ebene zugeführt werden. Ähnlich ist es möglich, dass jeder Ausgangsumrichter dazu ausgebildet sein kann, mehr als eine Ausgangsspannung zu generieren, um mehr als einen Lastkreis zu versorgen. Ferner kann der Umrichterverbund in einer weiteren Ausführungsform eine weitere Ebene Steuerungsumrichter aufweisen, die dann dazu ausgebildet sind, aus den Steuerungsspannungen der ersten Ebene zweite Steuerungsspannungen zu generieren, die den Ausgangsumrichtern als Eingangsspannungen zugeführt werden.

Nach einer noch weiteren Ausführungsform dieses Umrichterverbundes sind die Umrichter der Takteinheit, d. h. der Basisumrichter und die Steuerungsumrichter, ähnlich aufgebaut wie die Ausgangsumrichter. Dabei weisen der Basisumrichter und die Steuerungsumrichter jeweils zumindest zwei Wechselrichter sowie zumindest eine Steuerung zur Ansteuerung der zumindest zwei Wechselrichter auf. Dabei ist die Steuerung des Basisumrichters dazu ausgebildet, die zumindest zwei Wechselrichter zur Generierung der zumindest zwei auf den Referenztakt synchronisierten Basisspannungen mit den jeweiligen auf den Referenztakt bezogenen Phasenverschiebungen anzusteuern. Und die Steuerung der Steuerungsumrichter ist dazu ausgebildet, die zumindest zwei Wechselrichter zur Generierung der zumindest zwei auf den Referenztakt synchronisierten Steuerungsspannungen mit den jeweiligen auf den Referenztakt bezogenen Phasenverschiebungen anzusteuern.

Wie die Ausgangsumrichter können auch Basis- und Steuerungsumrichter als indirekte Umrichter ferner einen Gleichrichter und einen Zwischenkreis aufweisen. Ferner sind alternative Bauformen der Basis- und Steuerungsumrichter entsprechend den alternativen Bauformen der Ausgangsumrichter denkbar, die als Direkt- bzw. Matrix-Umrichter oder Hybridumrichter, oder an ein vorliegendes Betriebsnetz angepasst ausgebildet sind.

Nach einer noch weiteren erfindungsgemäßen Ausführungsform dieses Umrichterverbunds kann die Steuerung des Basisumrichters zur Erzeugung des Referenztakts ausgebildet sein und so die den Referenztakt erzeugende Vorrichtung bereitstellen. Dabei sind die Steuerung des Basisumrichters und die Steuerungen der Steuerungsumrichter wie die Steuerungen der Ausgangsumrichter über das Kommunikationsnetz verbunden, um deren Betrieb auf den Referenztakt zu synchronisieren.

Alternativ zu der Umrichtersteuerung kann als die den Referenztakt erzeugende Vorrichtung nach einer weiteren Ausführungsform eine den Referenztakt erzeugende Vorrichtung aus der Gruppe umfassend den Taktgenerator, den Frequenzgenerator und die Netzspannungsaufbereitungseinheit eingesetzt werden, die mit der Steuerung des Basisumrichters und damit auch mit den Steuerungen der Steuerungsumrichter und der Ausgangsumrichter verbunden sind.

Noch eine weitere Ausführungsform sieht vor, dass auch die Steuerungen der Basis- und Steuerungsumrichter eine Mess- und Regelungseinrichtung aufweisen oder damit verbunden sind. Dabei ist jede Mess- und Regelungseinrichtung dazu ausgebildet, einen Ist-Wert der Phasenverschiebung der jeweils generierten Spannung in Bezug zu dem Referenztakt zu messen, ggf. über das Kommunikationsnetz auszugeben, und den jeweiligen Ist- und Soll-Wert zur Bestimmung eines entsprechenden Stellwerts für die jeweilige Steuerung zu vergleichen.

Eine erfindungsgemäße Verwendung des erfindungsgemäßen Umrichterverbunds umfasst das Betreiben einer Betriebsanlage mit mehreren Lastkreisen, insbesondere einer induktiven Heizanlage mit mehreren Induktionseinheiten oder bevorzugt einer konduktiven Heizanlage mit mehreren Elektrodenpaaren. Dabei werden die Lastkreise mit den Ausgangsumrichtern zur Versorgung mit den synchronisierten Ausgangsspannungen verbunden, die die auf den Referenztakt bezogenen Phasenverschiebungen aufweisen.

Vorliegend wird zur Beschreibung des Umrichterverbunds und des Verfahrens auf Wechselspannungen als periodisch wechselndes Ein- und Ausgangssignal der Umrichter Bezug genommen. Es versteht sich von selbst, dass ein Bezug auf eine andere periodisch wechselnde Stromgröße wie z. B. die Stromstärke gleichermaßen möglich ist.

Ein ebenfalls erfindungsgemäßes Verfahren zur Bereitstellung einer Mehrzahl synchronisierter Ausgangsspannungen mit einstellbaren Phasenverschiebungen wird unter Verwendung eines erfindungsgemäßen Umrichterverbunds durchgeführt und umfasst gemäß einer ersten Ausführungsform die folgenden Schritte:
- Festlegen eines Referenztakts, der von der Takteinheit bereitgestellt wird, und Übermitteln des Referenztakts der Takteinheit an die zumindest zwei Ausgangsumrichter,
- Vorgeben einer auf den Referenztakt bezogenen Phasenverschiebung für jeden der zumindest zwei Ausgangsumrichter, und
- durch jeden Ausgangsumrichter Generieren einer auf den Referenztakt synchronisierten Ausgangsspannung mit der auf den Referenztakt bezogenen Phasenverschiebung. Nach einer weiteren Ausführungsform des erfindungsgemäßen Verfahrens umfasst das Generieren der synchronisierten Ausgangsspannungen mit den auf den Referenztakt bezogenen Phasenverschiebungen zur Regelung der jeweiligen Phasenverschiebung die folgenden Schritte:
- Setzen eines Soll-Werts zur Vorgabe der Phasenverschiebung der Ausgangsspannung des jeweiligen Ausgangsumrichters mittels zumindest einer Eingabeschnittstelle,
- Messen eines Ist-Werts der jeweiligen Phasenverschiebung in Bezug zu dem Referenztakt durch eine mit der Steuerung des jeweiligen Ausgangsumrichters verbundene Mess-und Regelungseinrichtung und Vergleichen des Ist- und Soll-Werts zum Bestimmen eines Stellwerts der Steuerung.

Nach einer noch weiteren Ausführungsform des erfindungsgemäßen Verfahrens umfasst das Generieren der auf den Referenztakt synchronisierten Ausgangsspannungen eine Modulation auf den Referenztakt, wobei jeweils ein moduliertes Signal erzeugt wird, dessen Pulsweiten sich symmetrisch zu den Flanken des Referenztakts einstellen.

Nach einer weiteren Ausführungsform umfasst das Verfahren unter Verwendung des Umrichterverbunds mit Basis- und Steuerungsumrichter die folgenden Schritte:
- Festlegen eines Referenztakts und Synchronisieren des Basisumrichters und der zumindest zwei Steuerungsumrichter der Takteinheit und der jeweils zumindest zwei Ausgangsumrichter jeder Ausgangseinheit auf den Referenztakt,
- aus einer Eingangsspannung durch den Basisumrichter Generieren von zumindest zwei auf den Referenztakt synchronisierten Basisspannungen mit jeweils einer auf den Referenztakt bezogenen Phasenverschiebung, die für jede der zumindest zwei Basisspannungen vorgegeben wird,
- aus jeder der Basisspannungen durch den jeweiligen Steuerungsumrichter Generieren von zumindest zwei auf den Referenztakt synchronisierten Steuerungsspannungen mit jeweils einer auf den Referenztakt bezogenen Phasenverschiebung, die für jede der zumindest zwei Steuerungsspannungen vorgegeben wird,
- aus jeder der Steuerungsspannungen durch den jeweiligen Ausgangsumrichter Generieren zumindest einer auf den Referenztakt synchronisierten Ausgangsspannung mit einer auf den Referenztakt bezogenen Phasenverschiebung, die für die zumindest eine Ausgangsspannung in Bezug auf den Referenztakt vorgegeben wird.

Nach den weiteren Ausführungsformen umfasst auch das Generieren der synchronisierten Basisspannungen und Steuerungsspannungen mit den auf den Referenztakt bezogenen Phasenverschiebungen zur Regelung der jeweiligen Phasenverschiebung die folgenden Schritte:
- Setzen eines Soll-Werts der jeweiligen Phasenverschiebungen mittels zumindest einer Eingabeschnittstelle über das Kommunikationsnetz,
- Messen eines Ist-Werts der jeweiligen Phasenverschiebung in Bezug zu dem Referenztakt durch eine mit der Steuerung verbundene Mess- und Regelungseinrichtung und ggf. Ausgeben des Ist-Werts über das Kommunikationsnetz, wobei der Ist- und Soll-Wert verglichen werden und ein Stellwert für die Steuerung bestimmt wird.

Ferner kann auch hierbei das Generieren der auf den Referenztakt synchronisierten Basisspannungen und Steuerungsspannungen eine Modulation auf den Referenztakt, wobei jeweils ein moduliertes Signal erzeugt wird, dessen Pulsweiten sich symmetrisch zu den Flanken des Referenztakts einstellen.

Weitere Ausführungsformen der erfindungsgemäßen Vorrichtungen und des Verfahrens sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine schematische Darstellung eines erfindungsgemäßen Umrichterverbunds,
- **Fig. 2**: Achsendiagramme von Phasenverschiebungen der mit dem Umrichterverbund generierbaren Ausgangsspannungen,
- **Fig. 3**: eine schematische Darstellung eines weiteren erfindungsgemäßen Umrichterverbunds,
- **Fig. 4**: Achsendiagramme von Phasenverschiebungen der mit dem Umrichterverbund generierbaren Ausgangsspannungen,
- **Fig. 5**: eine schematische Darstellung eines Basisumrichters,
- **Fig. 6**: eine schematische Darstellung eines Steuerungsumrichters,
- **Fig. 7**: eine schematische Darstellung eines Ausgangsumrichters,
- **Fig. 8**: eine schematische Darstellung eines erweiterten erfindungsgemäßen Umrichterverbunds,
- **Fig. 9**: Achsendiagramme von Referenztakt-Signal und moduliertem Signal.

Die Erfindung bezieht sich auf einen Umrichterverbund aus mehreren synchronisierten Umrichtern zur Bereitstellung frequenzsynchroner Ausgangsspannungen mit im Betrieb frei einstellbarer Phasenverschiebung. Ferner bezieht sich die Erfindung auf ein entsprechendes Verfahren zur Bereitstellung der frequenzsynchronen Ausgangsspannungen mit im Betrieb frei einstellbarer Phasenverschiebung unter Verwendung eines erfindungsgemäßen Umrichterverbunds.

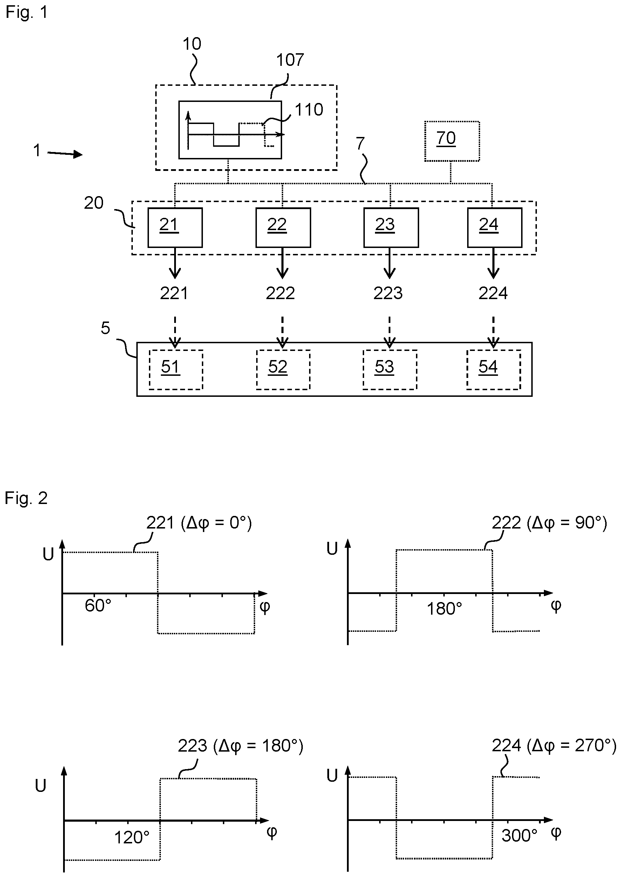

**Fig. 1** zeigt einen erfindungsgemäßen Umrichterverbund 1 mit einer Ausgangseinheit 20, die vier parallel unabhängig voneinander betreibbare Ausgangsumrichter 21, 22, 23, 24 umfasst. Modifikationen des Umrichterverbunds 1 bezüglich der Anzahl der Ausgangsumrichter sind selbstverständlich ohne weiteres möglich, sodass ein erfindungsgemäßer Umrichterverbund alternativ auch mehr oder weniger als vier Ausgangsumrichter aufweisen kann. Alle Ausgangsumrichter 21, 22, 23, 24 des Umrichterverbunds 1 erhalten von einer Takteinheit 10 einen Referenztakt 110 zur Generierung frequenzsynchroner Ausgangsspannungen 221, 222, 223, 224. Über eine gemeinsame Kommunikationsschnittstelle 70 wird für jeden Ausgangsumrichter 21, 22, 23, 24 jeweils ein Soll-Wert einer auf den Referenztakt 110 bezogenen Phasenverschiebung Δφ vorgegeben, die beliebig zwischen 0 und 360° liegen und auch im Betrieb verstellt werden kann.

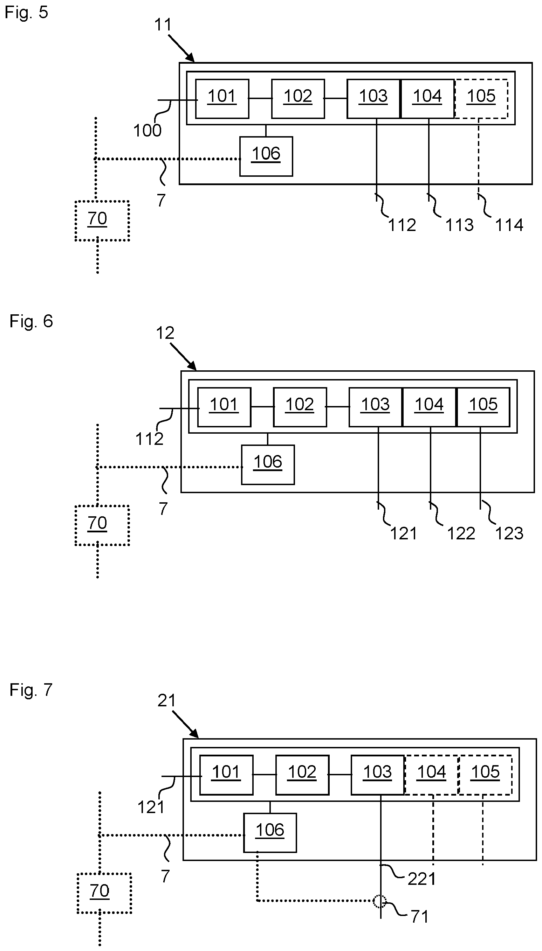

Der in **Fig. 7** dargestellte Ausgangsumrichter 21 zeigt stellvertretend den Aufbau aller Ausgangsumrichter 21, 22, 23, 24. Deren Aufbau umfasst eine Steuerung 106, die mit der Eingabeschnittstelle 70 zur Vorgabe der Phasenverschiebung Δφ über ein Kommunikationsnetz 7 kommunikativ verbunden ist, das auch in Fig. 1 als gepunktete Linien skizziert ist. Ferner wird das Kommunikationsnetz 7 auch zur Verbindung mit einem Taktgenerator 107 genutzt, den die Takteinheit 10 zur Erzeugung des Referenztakts 110 umfasst.

Wie in **Fig. 7** für den Ausgangsumrichter 21 dargestellt ist, umfasst dessen Aufbau außer der Steuerung 106 einen Gleichrichter 101, einen Zwischenkreis 102 und einen Wechselrichter 103, der durch die Steuerung 106 zur Generierung der auf den Referenztakt 110 synchronisierten Ausgangsspannung 221 mit der auf den Referenztakt bezogenen Phasenverschiebung Δφ angesteuert wird. Durch die Strichelierung wird in **Fig. 7** angedeutet, dass ein alternativer Aufbau des Ausgangsumrichters 21 mehr als einen Wechselrichter 103 aufweisen könnte. Ein mit einem zweiten Wechselrichter 104 und ggf. einem dritten Wechselrichter 105 ausgebildeter Ausgangsumrichter könnte entsprechend zwei oder drei auf den Referenztakt synchronisierte Ausgangsspannungen mit auf den Referenztakt bezogenen Phasenverschiebung Δφ generieren.

Nicht abgebildet sind Umrichter, die für eine modifizierte Ausführungsform des Umrichterverbunds mehr als drei Wechselrichter aufweisen, um mehr als drei Spannungen zu generieren, die auf den Referenztakt synchronisiert sind und eine auf den Referenztakt bezogene Phasenverschiebung Δφ aufweisen. Ebenfalls nicht abgebildet sind Direkt- oder Hybridumrichter, die in alternativen Ausführungsformen des Umrichterverbunds als Ausgangsumrichter eingesetzt werden könnten.

Wie in **Fig. 1** gezeigt ist, sind die von den vier Ausgangsumrichtern 21, 22, 23, 24 generierten Ausgangsspannungen 221, 222, 223, 224 zur Schaltung auf jeweils einen der Lastkreise 51, 52, 53, 54 einer Betriebsanlage 5 geeignet, beispielsweise zur Schaltung auf vier Elektrodenpaare 51, 52, 53, 54 einer konduktiven Heizanlage 5.

**Fig. 2** zeigt ein Beispiel für Phasenverschiebungen Δφ der vier Ausgangsspannungen 221, 222, 223, 224, jeweils bezogen auf einen Referenztakt 110 mit einem Nulldurchgang bei 0°. Die Phasenverschiebungen Δφ der Ausgangsspannungen 221, 222, 223, 224 betragen hier 0°, 90°, 180° und 270° in Bezug auf den Referenztakt 110.

Vorteilhaft sind die auf den Referenztakt 110 bezogenen Phasenverschiebungen Δφ an die Anzahl der Ausgangsspannung 221, 222, 223, 224 so angepasst, dass sie in ihren Phasenwinkeln zueinander gleichmäßig um 90° verschoben sind. Grundsätzlich können aber die auf den Referenztakt 110 bezogenen Phasenverschiebungen Δφ unabhängig voneinander beliebig gewählt werden.

Nach einer alternativen Ausführung des Umrichterverbunds sind die Umrichter in mehreren Ebenen nach der Art eines Baumdiagramms vernetzt, sodass der Umrichterverbund einfach durch Änderung der Verästelungsstruktur erweitert oder verkleinert werden kann. Die unterschiedlichen Bezeichnungen der Umrichter und Ausgangsspannungen erlauben hierin eine einfachere Unterscheidung der verschiedenen Ebenen, bedeuten aber keine Einschränkung bezüglich des Umrichteraufbaus, der grundsätzlich in allen Ebenen derselbe sein kann.

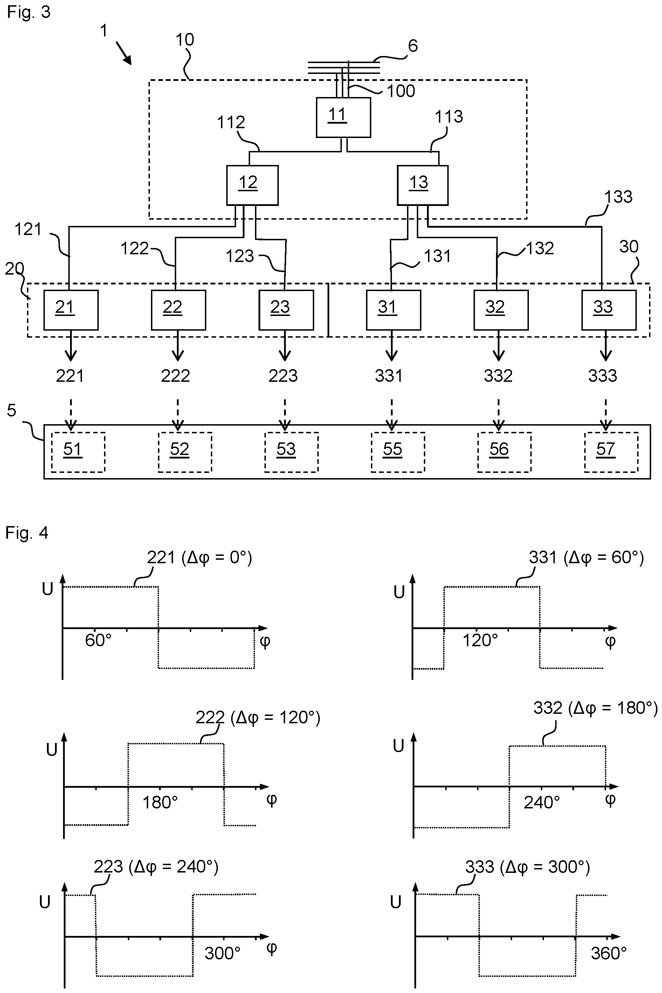

**Fig. 3** zeigt ein Beispiel für einen alternativen Umrichterverbund 1, dessen Baumstruktur eine Takteinheit 10 mit zwei Umrichterebenen und zumindest zwei Ausgangseinheiten 20, 30 als dritte Umrichterebene aufweist. Diese Takteinheit 10 weist einen Basisumrichter 11 in der ersten Ebene und zwei Steuerungsumrichter 12, 13 in der zweiten Umrichterebene auf. Die beiden Steuerungsumrichter 12, 13 sind mit dem Basisumrichter 11 verbunden, der an das Stromnetz 6 angeschlossen und dazu ausgebildet ist, aus einer Eingangsspannung 100 zwei Basisspannungen 112, 113 zu generieren. Nicht figurativ dargestellt sind übliche Komponenten wie z. B. Leistungsschalter, Hauptschalter oder elektrische Schaltelemente wie z. B. Transformatoren oder Kondensatoren, etwa zur Wandlung der Eingangsspannung 100 zum Hochfahren des Umrichterverbunds 1.

Die zwei von dem Basisumrichter 11 generierten Basisspannungen 112, 113 sind auf einen vorgegebenen Referenztakt synchronisiert und weisen in Bezug auf diesen Referenztakt bestimmte Phasenverschiebungen Δφ auf, die zum Betrieb des Umrichterverbunds 1 eingestellt werden können. Die eine Basisspannung 112 wird dem ersten Steuerungsumrichter 12 als Eingangsspannung zugeführt und die andere Basisspannung 113 dem zweiten Steuerungsumrichter 13. Der erste Steuerungsumrichter 12 generiert dann aus der einen Basisspannung 112 drei Steuerungsspannungen 121, 122, 123, die ebenfalls auf den Referenztakt synchronisiert sind und jeweils eine einstellbare, bestimmte Phasenverschiebung Δφ in Bezug auf den Referenztakt aufweisen. Analog dazu generiert der zweite Steuerungsumrichter 13 aus der anderen Basisspannung 113 drei weitere Steuerungsspannungen 131, 132, 133, die ebenfalls auf den Referenztakt synchronisiert sind und jeweils eine einstellbare, bestimmte Phasenverschiebung Δφ in Bezug auf den Referenztakt aufweisen.

Dem ersten Steuerungsumrichter 12 ist in der dritten Umrichterebene eine erste Ausgangseinheit 20 zugeordnet, die - entsprechend der Anzahl der generierten Steuerungsspannungen 121, 122, 123 - drei Ausgangsumrichter 21, 22, 23 aufweist. Die frequenzsynchronen Steuerungsspannungen 121, 122, 123, die die eingestellten Phasenverschiebungen Δφ aufweisen, bilden die Eingangsspannungen für die drei Ausgangsumrichter 21, 22, 23. Entsprechend ist dem zweiten Steuerungsumrichter 13 eine zweite Ausgangseinheit 30 mit drei Ausgangsumrichtern 31, 32, 33 zugeordnet, denen die frequenzsynchronen Steuerungsspannungen 131, 132, 133 mit den bestimmten Phasenverschiebungen Δφ als Eingangsspannungen zugeführt werden.

Die hier in Summe sechs Ausgangsumrichter 21, 22, 23, 31, 32, 33 generieren aus der jeweiligen Steuerungsspannung 121, 122, 123, 131, 132, 133 jeweils eine Ausgangsspannung 221, 222, 223, 331, 332, 333. Die sechs Ausgangsspannungen 221, 222, 223, 331, 332, 333 sind alle ebenfalls auf den Referenztakt synchronisiert und weisen die bestimmten, auf den Referenztakt bezogenen Phasenverschiebungen Δφ auf. Und da in dieser Ausführungsform bereits die Steuerungsspannungen auf den Referenztakt synchronisiert sind und die vorgegebene Phasenverschiebung aufweisen, können Ausgangsumrichter eingesetzt werden, die lediglich der Verstärkung bzw. Duplizierung der bereits phasenverschobenen Steuerungsspannung dienen. Aufgrund des einfacheren Aufbaus ohne Basis- und Steuerungsumrichter in der Takteinheit 10 kann allerdings ein wie in **Fig. 1** gezeigter Umrichterverbund bevorzugt sein, in dem jeder Ausgangsumrichter selbst die auf den Referenztakt synchronisierte Ausgangsspannung mit einer vorgegebenen, auf den Referenztakt bezogenen Phasenverschiebung generiert

**Fig. 4** zeigt ein Beispiel für in dem Umrichterverbund 1 aus **Fig. 3** vorgebbaren Phasenverschiebungen Δφ der sechs Ausgangsspannungen 221, 222, 223, 331, 332, 333, jeweils bezogen auf einen Referenztakt mit einem Nulldurchgang bei 0°. Die Phasenverschiebungen Δφ jeder Ausgangsspannung 221, 222, 223, 331, 332, 333 können hierbei den Phasenverschiebungen Δφ der jeweiligen Steuerungsspannung 121, 122, 123, 131, 132, 133 entsprechen. D. h., dass die Phasenverschiebung Δφ der Steuerungsspannungen 121, 122, 123 entsprechend 0°, 120°, 240° in Bezug auf den Referenztakt betragen, und die Phasenverschiebung Δφ der Steuerungsspannungen 131, 132, 133 entsprechend 60°, 180°, 300° in Bezug auf den Referenztakt. Für dieses Beispiel weist dann die Basisspannung 112, die dem ersten Steuerungsumrichter 12 zugeführt wird, eine Phasenverschiebung Δφ von 0° bezogen auf den Referenztakt auf, und die dem zweiten Steuerungsumrichter 13 zugeführte Basisspannung 113 eine bestimmte Phasenverschiebung Δφ von 60° bezogen auf den Referenztakt.

Vorteilhaft sind hierbei die auf den Referenztakt bezogenen Phasenverschiebungen Δφ an die Anzahl der Ausgangsspannungen 221, 222, 223, 331, 332, 333 angepasst, wobei die sechs Ausgangsspannungen 221, 222, 223, 331, 332, 333 in ihren Phasenwinkeln zueinander fest um 60° gleichmäßig verschoben sind. Allgemein können die Phasenverschiebungen Δφ in Bezug auf den Referenztakt so gewählt werden, dass die x Ausgangsspannungen in ihren Phasenwinkeln zueinander um 360°/x verschoben sind. Dies gilt auch für einen wie in Fig. 1 gezeigten Umrichterverbund 1 ohne Basis- und Steuerungsumrichter. Selbstverständlich ist es auch möglich, den Umrichterverbund 1 mit Phasenverschiebungen Δφ zu betreiben, die von den hier gezeigten Beispielen abweichen. Grundsätzlich können die auf den Referenztakt bezogenen Phasenverschiebungen Δφ unabhängig voneinander beliebig gewählt werden. So besteht eine Alternative auch darin, dass die auf den Referenztakt bezogenen Phasenverschiebungen Δφ keine gleichmäßige Phasenwinkelverschiebung zwischen den Ausgangsspannungen bereitstellen. Ferner ist es beispielsweise auch möglich, dass die auf den Referenztakt bezogenen Phasenverschiebungen Δφ einiger oder aller Ausgangsspannungen gleich groß sein können und dabei auch 0° bzw. 360° betragen können.

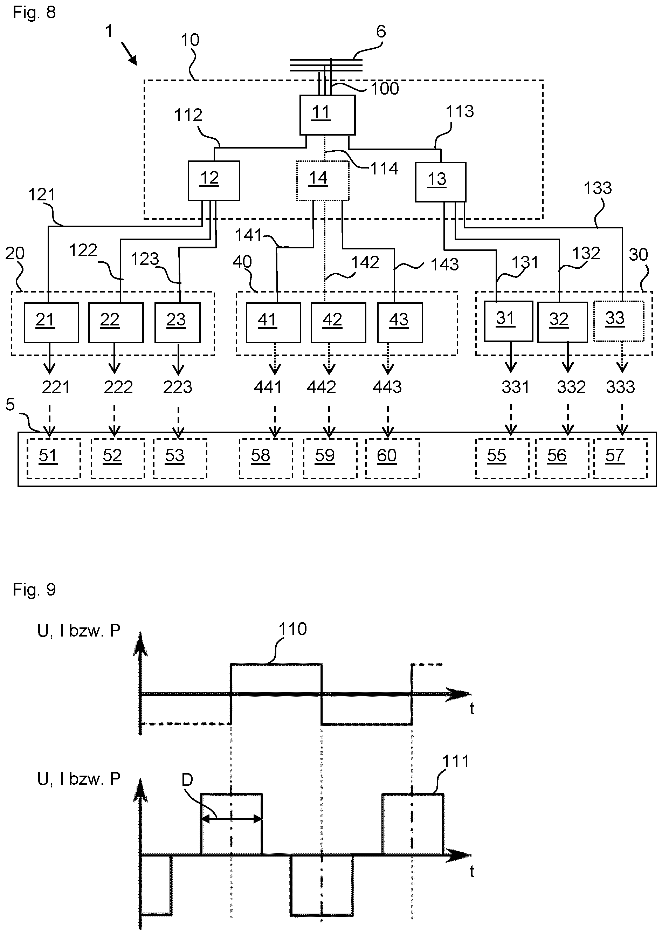

Und anders als im Beispiel von **Fig. 3** dargestellt, ist es auch möglich, dass ein Umrichterverbund 1 pro Ausgangseinheit 20, 30 nur zwei Ausgangsumrichter aufweist, wobei es dann ausreicht, wenn die Steuerungsumrichter aus der jeweiligen Basisspannung jeweils nur zwei Steuerungsspannungen generieren. Insbesondere ist aber auch eine Erweiterung des Umrichterverbunds 1 möglich, wie **Fig. 8** verdeutlicht: Dort weist die Takteinheit 10 drei Steuerungsumrichter 12, 13, 14 auf, die jeweils mit einer der von dem Basisumrichter 11 generierten Basisspannungen 112, 113, 114 versorgt werden. Mit den drei Steuerungsumrichtern 12, 13, 14 weist der Umrichterverbund 1 auch drei Ausgangseinheiten 20, 30, 40 auf, die jeweils einem der Steuerungsumrichter 12, 13, 14 zugeordnet sind. Auch der dritte Steuerungsumrichter 14 ist zur Generierung von drei Steuerungsspannungen 141, 142, 143 ausgebildet, mit denen die drei Ausgangsumrichter 41, 42, 43 der dritten Ausgangseinheit 40 versorgt werden. Damit weist der Umrichterverbund 1 in dieser Ausführungsform neun Ausgangsumrichter 21 - 43 auf, sodass neun frequenzsynchrone Ausgangsspannungen 221 - 443 generiert werden, deren Phasenverschiebungen Δφ in Bezug auf den Referenztakt eingestellt werden können. Beispielsweise können für einen Phasenwinkel der Ausgangsspannungen zueinander von 40° die auf den Referenztakt bezogenen Phasenverschiebungen Δφ der Ausgangsspannungen auf 0°, 40°, 80°, 120°...320° eingestellt werden. Wie ausgeführt, sind aber auch andere Phasenverschiebungen einstellbar und können auch im Betrieb geändert werden.

Wie in **Fig. 3** gezeigt ist, sind die von den sechs Ausgangsumrichtern 21 - 33 generierten Ausgangsspannungen 221 - 333 zur Schaltung auf jeweils einen der Lastkreise 51, 52, 53, 55, 56, 57 einer Betriebsanlage 5 geeignet. Entsprechend sind in **Fig. 8** die von den neun Ausgangsumrichtern 21 - 43 generierten Ausgangsspannungen 221 - 443 zur Schaltung auf jeweils einen der Lastkreise 51, 52, 53, 55, 56, 57, 58, 59, 60 einer Betriebsanlage 5 geeignet. Da sämtliche Ausgangsspannungen 221 - 333 bzw. 221 - 443 des Umrichterverbunds 1 auf den Referenztakt synchronisiert sind und ihre auf den Referenztakt bezogene Phasenverschiebung Δφ eingestellt werden kann, kann je nach Anwendung ein gezielter bzw. gleichmäßiger Energieeintrag der angeschlossenen Lastkreise 51- 57 bzw. 51 - 60 erfolgen. Bei der Betriebsanlage 5 kann es sich beispielsweise um eine konduktive Heizanlage mit Elektrodenpaaren als Lastkreise oder ggf. um eine Induktionsheizanlage mit Induktionseinheiten als Lastkreise handeln.

Der Umrichterverbund 1 ermöglicht vorteilhaft den synchronisierten Betrieb beliebig vieler Umrichter mit jeweils beliebiger Phasenverschiebung zueinander mit nur einer gemeinsamen Netzeinspeisung, wobei der Wirkfaktor cos φ am Netz nahe 1 liegt, auch im Teillastbetrieb. Dabei ist der Umrichterverbund 1 zum Einsatz bei induktiven und insbesondere konduktiven Anwendungen im Frequenzbereich von 5 Hz bis 400 kHz, insbesondere 50 Hz bis 130 kHz, z. B. 10 kHz oder 3 kHz, und im Leistungsbereich von 10 kW bis mehrere 6 MW geeignet.

Der Aufbau der Umrichter in den verschiedenen Umrichterebenen des alternativen Umrichterverbunds 1 kann sich nach der jeweiligen Verästelung richten, damit jeder Umrichter die gewünschte bzw. erforderliche Anzahl an Ausgangsspannungen als Eingangsspannungen für die Umrichter der nächsten Ebene bereitstellt. Dies wird mit **Fig. 5 bis 7** verdeutlicht, die schematisch Beispiele für den Basisumrichter 11, einen Steuerungsumrichter 12 und einen Ausgangsumrichter 21 zeigen, bei denen gleichartige Komponenten mit denselben Bezugszeichen versehen sind. Der Aufbau weiterer Steuerungsumrichter 13, 14 entspricht dem Aufbau des Steuerungsumrichters 12 **(****Fig. 6****),** und der Aufbau weiterer Ausgangsumrichter 22 - 43 entspricht dem Aufbau des Ausgangsumrichters 21 **(****Fig. 7****),** sodass sämtliche Ausführungen in Bezug auf die dargestellten Steuerungsumrichter 12 und Ausgangsumrichter 21 entsprechend jeweils für die nicht separat abgebildeten weiteren Steuerungsumrichter 13, 14 und Ausgangsumrichter 22 - 43 gelten.

Hierbei umfasst der Aufbau des Basisumrichters 11, des Steuerungsumrichters 12 und des Ausgangsumrichters 21 jeweils einen Gleichrichter 101, einen Zwischenkreis 102, einen oder mehrere Wechselrichter 103, 104, 105 und eine Steuerung 106. Anders als skizziert, kann jeder Umrichter auch mehr als eine Steuerung 106 aufweisen. Der Gleichrichter 101, dem ggf. Netzfilter vorgeschaltet ist, wandelt die Wechselspannung 100 aus dem Stromnetz 6 in eine Gleichspannung und stabilisiert den nachgeschalteten Zwischenkreis 102. Im Zwischenkreis 102 können ein Kondensator als Puffer zur Glättung der Spannung und ggf. eine Spule zur Drosselung intensiver Schwankungen vorgesehen sein. Der oder die Wechselrichter 103, 104, 105 wandelt/wandeln die geglättete Gleichspannung wieder in Wechselspannung um. Durch die Steuerung 106 wird der bzw. werden die am Zwischenkreis 102 verbaute(n) Wechselrichter 103, 104, 105 jeweils zur Generierung der Basisspannungen 112, 113, der Steuerungsspannungen 121, 122, 123 bzw. der Ausgangsspannung 221 angesteuert. Die Steuerungen 106 aller Umrichter sind über ein Kommunikationsnetz 7 verbunden, das in **Fig. 5 bis** 7 durch die gepunkteten Linien angedeutet ist. Zur Verbindung der Steuerungen 106 kann das Kommunikationsnetz 7 einen Kommunikationsstandard wie beispielsweise "Profinet" oder "Profibus" verwenden.

Die Anzahl der am Zwischenkreis 102 verbauten Wechselrichter 103, 104, 105 kann sich nach der Anzahl der jeweils vorgesehenen Basisspannungen 112, 113, Steuerungsspannungen 121, 122, 123 bzw. Ausgangsspannung 221 richten. Alternativ ist es möglich, dass die Steuerung 106, wenn mehr Wechselrichter 103, 104, 105 am Zwischenkreis 102 verbaut sind als benötigt werden, dazu ausgebildet ist, je nach benötigter Anzahl auch nur einen Teil der Wechselrichter anzusteuern.

So weist der in **Fig. 5** schematisch dargestellte Basisumrichter 11, der für den Umrichterverbund 1 aus **Fig. 3** geeignet ist, zur Generierung der zwei Basisspannungen 112, 113 zwei Wechselrichter 103, 104 auf. Alternativ ist es möglich, dass der Basisumrichter 11 noch einen dritten, gestrichelt dargestellten Wechselumrichter 105 aufweist und die Steuerung 106 zur Generierung der zwei Basisspannungen 112, 113 nur zwei Wechselrichter 103, 104 ansteuert. Dies gestattet vorteilhaft einen variablen Einsatz des Basisumrichters 11 auch in einem erweiterten Umrichterverbund 1 entsprechend **Fig. 8****,** in dem der Basisumrichter 11 die drei Basisströme 112, 113, 114 durch Ansteuerung der drei Wechselrichter 103, 104, 105 mittels der Steuerung 106 generiert.

Der in **Fig. 6** schematisch dargestellte Steuerungsumrichter 12, der zur Generierung der drei Steuerungsspannungen 121, 122, 123 drei Wechselrichter 103, 104, 105 aufweist, ist sowohl für den Umrichterverbund 1 aus **Fig. 3** als auch aus **Fig. 8** geeignet. Ein hierzu alternativer, nicht abgebildeter Steuerungsumrichter ist zur Generierung von zwei Steuerungsspannungen ausgebildet und kann in einem modifizierten Umrichterverbund eingesetzt werden, bei dem jede Ausgangseinheit zwei Ausgangsumrichter aufweist. Dazu weist ein solcher Steuerungsumrichter entsprechend zwei Wechselrichter auf, oder die Steuerung ist dazu ausgebildet, zur Generierung von zwei Steuerungsspannungen zwei von drei Wechselrichtern anzusteuern.

Der in **Fig. 7** schematisch gezeigte Ausgangsumrichter 21 ist auch zum Einsatz in dem Umrichterverbund 1 aus **Fig. 3** und **Fig. 8** geeignet.

Die Phasenverschiebung zum Referenztakt kann für jeden Umrichter des Umrichterverbunds 1 vorgegeben werden. Dann ist die Phasenverschiebung der Umrichter zueinander grundsätzlich fest, kann aber im Betrieb geändert werden und ist für jeden Umrichter beliebig einstellbar.

Um den Umrichterverbund 1 aus **Fig. 3** oder **8** zur Bereitstellung der frequenzsynchronen Ausgangsspannungen mit definierter Phasenverschiebung zu betreiben, sind auch dort Schnittstellen im Kommunikationsnetz 7 vorgesehen, für die in **Fig. 5** bis **7** beispielhaft die Eingabeschnittstelle 70 dargestellt ist. Die Eingabeschnittstelle 70 dient zur Vorgabe der angestrebten Phasenverschiebungen Δφ der von dem jeweiligen Umrichter generierten Spannung(en). Dabei ist nicht für jeden Umrichter eine eigene Eingabeschnittstelle 70 nötig, vielmehr ist es möglich, dass der Umrichterverbund 1 nur eine zentrale Eingabeschnittstelle 70 aufweist, die über das Kommunikationsnetz 7 mit den Steuerungen 106 aller Umrichter verbunden ist. Alternativ ist selbstverständlich auch ein Umrichterverbund mit mehreren Eingabeschnittstellen denkbar. In jedem Fall kann über das Kommunikationsnetz 7 der Steuerung 106 jedes Umrichters ein Soll-Wert der Phasenverschiebung Δφ in Bezug zu dem Referenztakt für die jeweils generierte Spannung eingegeben werden.

Es ist nicht figurativ abgebildet, dass ein erfindungsgemäßer Umrichterverbund 1 auch eine oder mehrere an das Kommunikationsnetz 7 angebundene Ausgabeschnittstellen aufweisen kann. Mit einer Ausgabeschnittstelle können z. B. vorteilhaft Messwerte der zum Referenztakt vorliegenden Phasenverschiebungen Δφ der generierten Spannungen ausgegeben werden. Dazu wird, wie in Fig. 7 für den Ausgangsumrichter 21 angedeutet, der Ist-Wert der Phasenverschiebung Δφ der Ausgangsspannung 221 in Bezug zu dem Referenztakt durch einen Sensor 71 gemessen und der mit dem Kommunikationsnetz 7 verbundenen Steuerung 106 zugeführt. Entsprechend können weitere Sensoren zur Messung der Ist-Phasenverschiebungen der Ausgangssignale der weiteren Umrichter vorgesehen sein, die deren Steuerungen 106 zugeführt werden. Durch die aus Sensor und Steuerung gebildete Mess- und Regelungseinrichtung, die ferner eine Phasenregelschleife PLL umfassen kann, wird der gemessene Ist-Wert mit dem gesetzten Soll-Wert verglichen und daraus ein Stellwert für die Steuerung 106 bestimmt, um Abweichungen des Ist-Werts von dem Soll-Wert zu minimieren. Dabei sind Änderungen der Soll-Werte der Phasenverschiebungen Δφ jederzeit möglich, wobei je nach Größe der Wertänderung eine Verzögerung von max. etwa 100 ms auftreten kann, bis die PLL "eingerastet" ist.

Zur Synchronisierung des Umrichterverbunds 1 aus **Fig. 3** und **8** wird der Referenztakt durch die Steuerung des Basisumrichters 11 erzeugt, alternativ kann ein separater Frequenzgenerator oder die Netzfrequenz nach geeigneter Aufbereitung der Netzspannung 100 mittels einer Netzstromaufbereitungseinheit zur Erzeugung des Referenztakts genutzt werden. Da die Steuerungen 106 sämtlicher Umrichter 11 - 33 des Umrichterverbunds 1 aus **Fig. 3** bzw. die Steuerungen 106 sämtlicher Umrichter 11 - 43 des Umrichterverbunds 1 aus **Fig. 8** über das Kommunikationsnetz 7 miteinander kommunizieren, können alle Umrichter des Umrichterverbunds 1 auf diesen Referenztakt synchronisiert werden, um jeweils die auf den Referenztakt synchronisierten Basisspannungen 112, 113, 114, Steuerungsspannungen 121, 122, 123, 131, 132, 133, 141, 142, 143 und Ausgangsspannungen 221, 222, 223, 331, 332, 333, 441, 442, 443 zu generieren.

Um den Betrieb des Umrichterverbunds 1 weiter zu verbessern, indem eine möglichst geringe Interferenz zwischen den synchronisierten Umrichtern 21 - 24 **(****Fig. 1****),** bzw. 11 - 33 **(****Fig. 3****)** oder 11 - 43 **(****Fig. 8****)** auftritt, kann die jeweils generierte Spannung als ein auf den Referenztakt 110 moduliertes Signal 111 erzeugt werden. Dabei werden die Umrichter 21 - 24 (bzw. 11 - 33, 11 - 43), bzw. deren Wechselrichter 103, 104, 105 so ausgesteuert, dass sich die Pulse des modulierten Signals 111 mit der Pulsbreite D symmetrisch zu den Flanken des Referenztaktes 110 einstellen. Wie in **Fig. 9** gezeigt, stellen sich die positiven Wechselrichter-Ausgangsspannungspulse des modulierten Signals 111 symmetrisch zur steigenden Flanke des Referenztakts 110, und die negativen Wechselrichter-Ausgangsspannungspulse des modulierten Signals 111 symmetrisch zur fallenden Flanke des Referenztakts 110 ein. Damit ist sichergestellt, dass auch bei unterschiedlicher Aussteuerung der Pulsbreiten D verschiedener Umrichter kleinstmögliche Querströme fließen können.

### BEZUGSZEICHENLISTE

- 1: Umrichterverbund
- 10: Takteinheit
- 100: Eingangsspannung
- 101: Gleichrichter
- 102: Zwischenkreis
- 103-105: Wechselrichter
- 106: Steuerung
- 107: Taktgenerator
- 11: Basisumrichter
- 110, 111: Referenztakt, moduliertes Signal
- 112, 113: erste, zweite Basisspannung
- 114: dritte Basisspannung
- 12: erster Steuerungsumrichter
- 121, 122, 123: Steuerungsspannungen
- 13: zweiter Steuerungsumrichter
- 131, 132, 133: Steuerungsspannungen
- 14: dritter Steuerungsumrichter
- 141, 142, 143: Steuerungsspannungen
- 20: erste Ausgangseinheit
- 21,22,23,24: Ausgangsumrichter
- 221, 222, 223, 224: Ausgangspannungen
- 30: zweite Ausgangseinheit
- 31, 32, 33: Ausgangsumrichter
- 331, 332, 333: Ausgangsspannungen
- 40: dritte Ausgangseinheit
- 41, 42, 43: Ausgangsumrichter
- 441,442,443: Ausgangsspannungen
- 5: Betriebsanlage/induktive oder konduktive Heizanlage
- 51 - 60: Lastkreis/Induktionseinheit oder Elektrodenpaar
- 6: Stromnetz
- 7: Kommunikationsnetz
- 70: Eingabeschnittstelle/Kommunikationsschnittstelle
- 71: Sensor (Mess- und Regelungseinrichtung)
- Δφ: Phasenverschiebung
- D: Pulsweite

## Patentansprüche

1. Umrichterverbund (1), ausgebildet zur Bereitstellung einer Mehrzahl synchronisierter Ausgangsspannungen (221, 222, 223, 224) mit einstellbaren Phasenverschiebungen, wobei der Umrichterverbund (1)
- eine Takteinheit (10), die dazu ausgebildet ist, einen Referenztakt (110) bereitzustellen, und
- zumindest zwei Ausgangsumrichter (21, 22, 23, 24) aufweist, die mit der Takteinheit (10) verbunden und dazu ausgebildet sind, eine auf den Referenztakt (110) synchronisierte Ausgangsspannung (221, 222, 223, 224) mit einer auf den Referenztakt (110) bezogenen Phasenverschiebung (Δφ) zu generieren, die für jeden der zumindest zwei Ausgangsumrichter (21, 22, 23, 24) vorgebbar ist.

2. Umrichterverbund (1) nach Anspruch 1, wobei
jeder Ausgangsumrichter (21, 22, 23, 24) zumindest eine Steuerung (106) aufweist, die mit einer zur Vorgabe eines Soll-Werts der jeweiligen Phasenverschiebung (Δφ) ausgebildeten Eingabeschnittstelle (70) kommunikativ verbunden ist.

3. Umrichterverbund (1) nach Anspruch 2, wobei
jeder Ausgangsumrichter (21, 22, 23, 24) zumindest einen Wechselrichter (103, 104, 105) aufweist, und die zumindest eine Steuerung (106) dazu ausgebildet ist, den zumindest einen Wechselrichter (103, 104, 105) zur Generierung der zumindest einen auf den Referenztakt (110) synchronisierten Ausgangsspannung (221, 222, 223, 224) mit der jeweiligen auf den Referenztakt (110) bezogenen Phasenverschiebung (Δφ) anzusteuern.

4. Umrichterverbund (1) nach zumindest einem der Ansprüche 1 bis 3, wobei die Takteinheit (10) eine den Referenztakt (110) erzeugende Vorrichtung aufweist, die aus einer Gruppe ausgewählt ist, die zumindest einen Taktgenerator (107), einen Frequenzgenerator, eine Netzspannungsaufbereitungseinheit und eine Umrichtersteuerung umfasst.

5. Umrichterverbund (1) nach Anspruch 4, wobei
der Umrichterverbund (1) zumindest ein Kommunikationsnetz (7) aufweist,
- mit dem die den Referenztakt (110) erzeugende Vorrichtung und die Ausgangsumrichter (21, 22, 23, 24) verbunden sind, und/oder
- das die Eingabeschnittstelle (70) zur Vorgabe des Soll-Werts der jeweiligen Phasenverschiebung (Δφ) aufweist.

6. Umrichterverbund (1) nach zumindest einem der Ansprüche 2 bis 5, wobei jede Steuerung (106) eine Mess- und Regelungseinrichtung aufweist oder damit verbunden ist, wobei jede Mess- und Regelungseinrichtung dazu ausgebildet ist, einen Ist-Wert der jeweiligen Phasenverschiebung (Δφ) in Bezug zu dem Referenztakt (110) zu messen und mit dem Soll-Wert zur Bestimmung eines Stellwerts der Steuerung (106) zu vergleichen.

7. Umrichterverbund (1) nach zumindest einem der Ansprüche 1 bis 6, wobei die Takteinheit (10) einen Basisumrichter (11) und zumindest zwei Steuerungsumrichter (12, 13) aufweist, die mit dem Basisumrichter (11) verbunden sind, wobei
- der Basisumrichter (11) dazu ausgebildet ist, aus einer Eingangsspannung (100) zumindest zwei auf einen Referenztakt (110) synchronisierte Basisspannungen (112, 113) mit jeweils einer auf den Referenztakt (110) bezogenen Phasenverschiebung (Δφ) zu generieren, und
- jeder Steuerungsumrichter (12, 13) dazu ausgebildet ist, aus jeweils einer der Basisspannungen (112, 113) zumindest zwei auf den Referenztakt (110) synchronisierte Steuerungsspannungen (121, 122, 123, 131, 132, 133) mit jeweils einer auf den Referenztakt (110) bezogenen Phasenverschiebung (Δφ) zu generieren,
und wobei der Umrichterverbund (1) zumindest zwei Ausgangseinheiten (20, 30) aufweist und jede Ausgangseinheit (20, 30)
- zumindest zwei Ausgangsumrichter (21, 22, 23, 31, 32, 33) aufweist, die jeweils einem der Steuerungsumrichter (12, 13) zugeordnet sind, wobei jeder Ausgangsumrichter (21, 22, 23, 31, 32, 33) dazu ausgebildet ist, aus einer der Steuerungsspannungen (121, 122, 123, 131, 132, 133) des ihm zugeordneten Steuerungsumrichters (12, 13) zumindest eine auf den Referenztakt (110) synchronisierte Ausgangsspannung (221, 222, 223, 331, 332, 333) mit einer auf den Referenztakt (110) bezogenen Phasenverschiebung (Δφ) zu generieren,
wobei die Ausgangsspannungen (221, 222, 223, 331, 332, 333) aller Ausgangsumrichter (21, 22, 23, 31, 32, 33) mit ihren auf den Referenztakt (110) bezogenen Phasenverschiebungen (Δφ) auf den Referenztakt (110) synchronisiert sind.

8. Umrichterverbund (1) nach Anspruch 7, wobei
der Basisumrichter (11) und die zumindest zwei Steuerungsumrichter (12, 13) jeweils zumindest zwei Wechselrichter (103, 104, 105) sowie zumindest eine Steuerung (106) zur Ansteuerung der zumindest zwei Wechselrichter (103, 104, 105) aufweisen,
wobei
- die Steuerung (106) des Basisumrichters (11) dazu ausgebildet ist, die zumindest zwei Wechselrichter (103, 104, 105) zur Generierung der zumindest zwei auf den Referenztakt (110) synchronisierten Basisspannungen (112, 113) mit den jeweiligen auf den Referenztakt (110) bezogenen Phasenverschiebungen (Δφ) anzusteuern,
- die Steuerung (106) der Steuerungsumrichter (12, 13) dazu ausgebildet ist, die zumindest zwei Wechselrichter (103, 104, 105) zur Generierung der zumindest zwei auf den Referenztakt (110) synchronisierten Steuerungsspannungen (121, 122, 123, 131, 132, 133) mit den jeweiligen auf den Referenztakt (110) bezogenen Phasenverschiebungen (Δφ) anzusteuern.

9. Umrichterverbund (1) nach Anspruch 8, wobei
die Steuerung (106) des Basisumrichters (11) ferner zur Erzeugung des Referenztakts (110) ausgebildet ist und die den Referenztakt (110) erzeugende Vorrichtung bereitstellt, und/oder die Steuerungen (106) des Basisumrichters (11) und der Steuerungsumrichter (12, 13) über das Kommunikationsnetz (7) verbunden sind.

10. Verwendung eines Umrichterverbunds (1) nach zumindest einem der Ansprüche 1 bis 9 zum Betreiben einer Betriebsanlage (5) mit einer Mehrzahl an Lastkreisen (51, 52, 53, 54), insbesondere einer induktiven oder konduktiven Heizanlage mit einer Mehrzahl an Induktionseinheiten oder Elektrodenpaaren, wobei die Lastkreise (51, 52, 53, 54) mit den Ausgangsumrichtern (21, 22, 23,224) zur Versorgung mit den synchronisierten Ausgangsspannungen (221, 222, 223, 224) verbunden werden.

11. Verfahren zur Bereitstellung einer Mehrzahl synchronisierter Ausgangsspannungen (221, 222, 223,224) mit einstellbaren Phasenverschiebungen unter Verwendung eines Umrichterverbunds (1) nach zumindest einem der Ansprüche 1 bis 9, umfassend die Schritte
- Festlegen eines Referenztakts (110), der von der Takteinheit (10) bereitgestellt wird, und Übermitteln des Referenztakts (110) der Takteinheit (10) an die zumindest zwei Ausgangsumrichter (21, 22, 23, 24),
- Vorgeben einer auf den Referenztakt (110) bezogenen Phasenverschiebung (Δφ) für jeden der zumindest zwei Ausgangsumrichter (21, 22, 23, 24), und
- durch jeden Ausgangsumrichter (21, 22, 23, 24) Generieren einer auf den Referenztakt (110) synchronisierten Ausgangsspannung (221, 222, 223, 224) mit der auf den Referenztakt (110) bezogenen Phasenverschiebung (Δφ).

12. Verfahren nach Anspruch 11, wobei das Generieren der synchronisierten Ausgangsspannungen (221, 222, 223, 224) mit den auf den Referenztakt (110) bezogenen Phasenverschiebungen (Δφ) zur Regelung der jeweiligen Phasenverschiebung umfasst:
- Setzen eines Soll-Werts zur Vorgabe der Phasenverschiebung (Δφ) des jeweiligen Ausgangsumrichters (21, 22, 23, 24) mittels zumindest einer Eingabeschnittstelle (70),
- Messen eines Ist-Werts der jeweiligen Phasenverschiebung (Δφ) in Bezug zu dem Referenztakt (110) durch eine Mess- und Regelungseinrichtung, die mit einer Steuerung (106) des jeweiligen Ausgangsumrichters (21, 22, 23, 24) verbunden ist, und Vergleichen des Ist- und Soll-Werts zum Bestimmen eines Stellwerts der Steuerung (106).

13. Verfahren nach Anspruch 11 oder 12, wobei das Generieren der auf den Referenztakt (110) synchronisierten Ausgangsspannungen (221, 222, 223, 224) eine Modulation auf den Referenztakt (110) umfasst, wobei jeweils ein moduliertes Signal (111) erzeugt wird, dessen Pulsweiten (D) sich symmetrisch zu den Flanken des Referenztakts (110) einstellen.

14. Verfahren nach zumindest einem der Ansprüche 11 bis 13,
umfassend ferner die Schritte
- Synchronisieren des Basisumrichters (11) und der zumindest zwei Steuerungsumrichter (12, 13) der Takteinheit (10) und der jeweils zumindest zwei Ausgangsumrichter (21, 22, 23, 31, 32, 33) jeder Ausgangseinheit (20, 30) auf den Referenztakt (110),
- aus einer Eingangsspannung (100) durch den Basisumrichter (11) Generieren von zumindest zwei auf den Referenztakt (110) synchronisierten Basisspannungen (112, 113) mit jeweils einer auf den Referenztakt (110) bezogenen Phasenverschiebung (Δφ), die für jede der Basisspannungen (112, 113) vorgegeben wird,
- aus jeder der Basisspannungen (112, 113) durch den jeweiligen Steuerungsumrichter (12, 13) Generieren von zumindest zwei auf den Referenztakt (110) synchronisierten Steuerungsspannungen (121, 122, 123, 131, 132, 133) mit jeweils einer auf den Referenztakt (110) bezogenen Phasenverschiebung (Δφ), die für jede der Steuerungsspannungen (121, 122, 123, 131, 132, 133) vorgegeben wird,
- aus jeder der Steuerungsspannungen (121, 122, 123, 131, 132, 133) durch den jeweiligen Ausgangsumrichter (21, 22, 23, 31, 32, 33) Generieren zumindest einer auf den Referenztakt (110) synchronisierten Ausgangsspannung (221, 222, 223, 331, 332, 333) mit einer auf den Referenztakt (110) bezogenen Phasenverschiebung (Δφ), die für die Ausgangsspannung (221, 222, 223, 331, 332, 333) in Bezug auf den Referenztakt (110) vorgegeben wird.

## Geänderte Patentansprüche

### Geänderte Patentansprüche gemäss Regel 137(2) EPÜ.

1. **Umrichterverbund** (1), ausgebildet zur Bereitstellung einer Mehrzahl synchronisierter Ausgangsspannungen (221, 222, 223, 224) mit frei einstellbaren, im Betrieb änderbaren Phasenverschiebungen zur Schaltung auf jeweils einen Lastkreis einer Betriebsanlage, die eine Mehrzahl von Lastkreisen aufweist, wobei der Umrichterverbund (1)
- eine Takteinheit (10), die dazu ausgebildet ist, einen Referenztakt (110) bereitzustellen, und
- zumindest zwei Ausgangsumrichter (21, 22, 23, 24) aufweist, die mit der Takteinheit (10) verbunden und dazu ausgebildet sind, jeweils eine auf den Referenztakt (110) synchronisierte Ausgangsspannung (221, 222, 223, 224) mit einer auf den Referenztakt (110) bezogenen Phasenverschiebung (Δcp) zu generieren, die unabhängig voneinander beliebig für jeden der zumindest zwei Ausgangsumrichter (21, 22, 23, 24) separat vorgebbar ist, und
wobei
jeder Ausgangsumrichter (21, 22, 23, 24) zumindest eine Steuerung (106) aufweist, die mit einer zur Vorgabe eines Soll-Werts der jeweiligen Phasenverschiebung (Δφ) ausgebildeten Eingabeschnittstelle (70) kommunikativ verbunden ist.

2. Umrichterverbund (1) nach Anspruch 1, wobei
jeder Ausgangsumrichter (21, 22, 23, 24) zumindest einen Wechselrichter (103, 104, 105) aufweist, und die zumindest eine Steuerung (106) dazu ausgebildet ist, den zumindest einen Wechselrichter (103, 104, 105) zur Generierung der zumindest einen auf den Referenztakt (110) synchronisierten Ausgangsspannung (221, 222, 223, 224) mit der jeweiligen auf den Referenztakt (110) bezogenen Phasenverschiebung (Δφ) anzusteuern.

3. Umrichterverbund (1) nach Anspruch 1 oder 2, wobei
die Takteinheit (10) eine den Referenztakt (110) erzeugende Vorrichtung aufweist, die aus einer Gruppe ausgewählt ist, die zumindest einen Taktgenerator (107), einen Frequenzgenerator, eine Netzspannungsaufbereitungseinheit und eine Umrichtersteuerung umfasst.

4. Umrichterverbund (1) nach Anspruch 3, wobei
der Umrichterverbund (1) zumindest ein Kommunikationsnetz (7) aufweist,
- mit dem die den Referenztakt (110) erzeugende Vorrichtung und die Ausgangsumrichter (21, 22, 23, 24) verbunden sind, und/oder
- das die Eingabeschnittstelle (70) zur Vorgabe des Soll-Werts der jeweiligen Phasenverschiebung (Δφ) aufweist.

5. Umrichterverbund (1) nach zumindest einem der Ansprüche 1 bis 4, wobei jede Steuerung (106) eine Mess- und Regelungseinrichtung aufweist oder damit verbunden ist, wobei jede Mess- und Regelungseinrichtung dazu ausgebildet ist, einen Ist-Wert der jeweiligen Phasenverschiebung (Δφ) in Bezug zu dem Referenztakt (110) zu messen und mit dem Soll-Wert zur Bestimmung eines Stellwerts der Steuerung (106) zu vergleichen.

6. Umrichterverbund (1) nach zumindest einem der Ansprüche 1 bis 5, wobei die Takteinheit (10) einen Basisumrichter (11) und zumindest zwei Steuerungsumrichter (12, 13) aufweist, die mit dem Basisumrichter (11) verbunden sind, wobei
- der Basisumrichter (11) dazu ausgebildet ist, aus einer Eingangsspannung (100) zumindest zwei auf einen Referenztakt (110) synchronisierte Basisspannungen (112, 113) mit jeweils einer auf den Referenztakt (110) bezogenen Phasenverschiebung (Δφ) zu generieren, und
- jeder Steuerungsumrichter (12, 13) dazu ausgebildet ist, aus jeweils einer der Basisspannungen (112, 113) zumindest zwei auf den Referenztakt (110) synchronisierte Steuerungsspannungen (121, 122, 123, 131, 132, 133) mit jeweils einer auf den Referenztakt (110) bezogenen Phasenverschiebung (Δφ) zu generieren,
und wobei der Umrichterverbund (1) zumindest zwei Ausgangseinheiten (20, 30) aufweist und jede Ausgangseinheit (20, 30)
- zumindest zwei Ausgangsumrichter (21, 22, 23, 31, 32, 33) aufweist, die jeweils einem der Steuerungsumrichter (12, 13) zugeordnet sind, wobei jeder Ausgangsumrichter (21, 22, 23, 31, 32, 33) dazu ausgebildet ist, aus einer der Steuerungsspannungen (121, 122, 123, 131, 132, 133) des ihm zugeordneten Steuerungsumrichters (12, 13) zumindest eine auf den Referenztakt (110) synchronisierte Ausgangsspannung (221, 222, 223, 331, 332, 333) mit einer auf den Referenztakt (110) bezogenen Phasenverschiebung (Δφ) zu generieren,
wobei die Ausgangsspannungen (221, 222, 223, 331, 332, 333) aller Ausgangsumrichter (21, 22, 23, 31, 32, 33) mit ihren auf den Referenztakt (110) bezogenen Pha**senverschiebungen** (Δφ) auf den Referenztakt (110) synchronisiert sind.

7. Umrichterverbund (1) nach Anspruch 6, wobei
der Basisumrichter (11) und die zumindest zwei Steuerungsumrichter (12, 13) jeweils zumindest zwei Wechselrichter (103, 104, 105) sowie zumindest eine Steuerung (106) zur Ansteuerung der zumindest zwei Wechselrichter (103, 104, 105) aufweisen,
wobei
- die Steuerung (106) des Basisumrichters (11) dazu ausgebildet ist, die zumindest zwei Wechselrichter (103, 104, 105) zur Generierung der zumindest zwei auf den Referenztakt (110) synchronisierten Basisspannungen (112, 113) mit den jeweiligen auf den Referenztakt (110) bezogenen Phasenverschiebungen (Δφ) anzusteuern,
- die Steuerung (106) der Steuerungsumrichter (12, 13) dazu ausgebildet ist, die zumindest zwei Wechselrichter (103, 104, 105) zur Generierung der zumindest zwei auf den Referenztakt (110) synchronisierten Steuerungsspannungen (121, 122, 123, 131, 132, 133) mit den jeweiligen auf den Referenztakt (110) bezogenen Phasenverschiebungen (Δφ) anzusteuern.

8. Umrichterverbund (1) nach Anspruch 7, wobei
die Steuerung (106) des Basisumrichters (11) ferner zur Erzeugung des Referenztakts (110) ausgebildet ist und die den Referenztakt (110) erzeugende Vorrichtung bereitstellt, und/oder die Steuerungen (106) des Basisumrichters (11) und der Steuerungsumrichter (12, 13) über das Kommunikationsnetz (7) verbunden sind.

9. Verwendung eines Umrichterverbunds (1) nach zumindest einem der Ansprüche 1 bis 8 zum Betreiben einer Betriebsanlage (5) mit einer Mehrzahl an Lastkreisen (51, 52, 53, 54), insbesondere einer induktiven oder konduktiven Heizanlage mit einer Mehrzahl an Induktionseinheiten oder Elektrodenpaaren, wobei die Lastkreise (51, 52, 53, 54) mit den Ausgangsumrichtern (21, 22, 23,224) zur Versorgung mit den synchronisierten Ausgangsspannungen (221, 222, 223, 224) verbunden werden, wobei die erzeugten Ausgangsspannungen (221, 222, 223, 224) auf jeweils einen der Lastkreise (51, 52, 53, 54) der Betriebsanlage (5) geschaltet werden.

10. Verfahren zur Bereitstellung einer Mehrzahl synchronisierter Ausgangsspannungen (221, 222, 223,224) mit einstellbaren Phasenverschiebungen unter Verwendung eines Umrichterverbunds (1) nach zumindest einem der Ansprüche 1 bis 8, umfassend die Schritte
- Festlegen eines Referenztakts (110), der von der Takteinheit (10) bereitgestellt wird, und Übermitteln des Referenztakts (110) der Takteinheit (10) an die zumindest zwei Ausgangsumrichter (21, 22, 23, 24),
- Vorgeben einer auf den Referenztakt (110) bezogenen Phasenverschiebung (Δφ) für jeden der zumindest zwei Ausgangsumrichter (21, 22, 23, 24), und
- durch jeden Ausgangsumrichter (21, 22, 23, 24) Generieren einer auf den Referenztakt (110) synchronisierten Ausgangsspannung (221, 222, 223, 224) mit der auf den Referenztakt (110) bezogenen Phasenverschiebung (Δφ).

11. Verfahren nach Anspruch 10, wobei das Generieren der synchronisierten Ausgangsspannungen (221, 222, 223, 224) mit den auf den Referenztakt (110) bezogenen Phasenverschiebungen (Δφ) zur Regelung der jeweiligen Phasenverschiebung umfasst:
- Setzen eines Soll-Werts zur Vorgabe der Phasenverschiebung (Δφ) des jeweiligen Ausgangsumrichters (21, 22, 23, 24) mittels zumindest einer Eingabeschnittstelle (70),
- Messen eines Ist-Werts der jeweiligen Phasenverschiebung (Δφ) in Bezug zu dem Referenztakt (110) durch eine Mess- und Regelungseinrichtung, die mit einer Steuerung (106) des jeweiligen Ausgangsumrichters (21, 22, 23, 24) verbunden ist, und Vergleichen des Ist- und Soll-Werts zum Bestimmen eines Stellwerts der Steuerung (106).

12. Verfahren nach Anspruch 10 oder 11, wobei das Generieren der auf den Referenztakt (110) synchronisierten Ausgangsspannungen (221, 222, 223, 224) eine Modulation auf den Referenztakt (110) umfasst, wobei jeweils ein moduliertes Signal (111) erzeugt wird, dessen Pulsweiten (D) sich symmetrisch zu den Flanken des Referenztakts (110) einstellen.

13. Verfahren nach zumindest einem der Ansprüche 10 bis 12,
umfassend ferner die Schritte
- Synchronisieren des Basisumrichters (11) und der zumindest zwei Steuerungsumrichter (12, 13) der Takteinheit (10) und der jeweils zumindest zwei Ausgangsumrichter (21, 22, 23, 31, 32, 33) jeder Ausgangseinheit (20, 30) auf den Referenztakt (110),
- aus einer Eingangsspannung (100) durch den Basisumrichter (11) Generieren von zumindest zwei auf den Referenztakt (110) synchronisierten Basisspannungen (112, 113) mit jeweils einer auf den Referenztakt (110) bezogenen Phasenverschiebung (Δφ), die für jede der Basisspannungen (112, 113) vorgegeben wird,
- aus jeder der Basisspannungen (112, 113) durch den jeweiligen Steuerungsumrichter (12, 13) Generieren von zumindest zwei auf den Referenztakt (110) synchronisierten Steuerungsspannungen (121, 122, 123, 131, 132, 133) mit jeweils einer auf den Referenztakt (110) bezogenen Phasenverschiebung (Δφ), die für jede der Steuerungsspannungen (121, 122, 123, 131, 132, 133) vorgegeben wird,
- aus jeder der Steuerungsspannungen (121, 122, 123, 131, 132, 133) durch den jeweiligen Ausgangsumrichter (21, 22, 23, 31, 32, 33) Generieren zumindest einer auf den Referenztakt (110) synchronisierten Ausgangsspannung (221, 222, 223, 331, 332, 333) mit einer auf den Referenztakt (110) bezogenen Phasenverschiebung (Δφ), die für die Ausgangsspannung (221, 222, 223, 331, 332, 333) in Bezug auf den Referenztakt (110) vorgegeben wird.
